# EUROPÄISCHE PATENTSCHRIFT

(11) **EP 1 283 944 B1**
(45) Veröffentlichungstag und Bekanntmachung des Hinweises auf die Patenterteilung: **03.05.2006**
(21) Anmeldenummer: 01940504.2
(22) Anmeldetag: 19.05.2001
(51) Int. Cl.: F01M 11/03, F16N 39/06

(54) **VORRICHTUNG ZUR SENSIERUNG DES ÖLZUSTANDS**
DEVICE FOR SENSING THE STATE OF OIL
DISPOSITIF DE DETECTION DE L'ETAT DE L'HUILE

(30) Priorität: 24.05.2000 DE 10025690
(43) Veröffentlichungstag der Anmeldung: 19.02.2003
(73) Patentinhaber: ZF FRIEDRICHSHAFEN Aktiengesellschaft, 88038 Friedrichshafen (DE)
(72) Erfinder: REMMLINGER, Hubert, 88046 Friedrichshafen (DE); MARTIN, Jörg, 88094 Oberteuringen (DE); GIERER, Georg, 88079 Kressbronn (DE); RUNGE, Wolfgang, 88214 Ravensburg (DE)
(86) Internationale Anmeldenummer: PCT/EP2001/005757
(87) Internationale Veröffentlichungsnummer: WO 2001/090539

(56) Entgegenhaltungen:
- DE-A- 3 617 598
- US-A- 4 766 860
- US-A- 4 783 271
- US-A- 5 023 133
- US-A- 5 789 665
- US-A- 5 814 214
- US-A- 5 968 371

## Beschreibung

Die vorliegende Erfindung betrifft eine Vorrichtung zur Sensierung bzw. zur Überwachung des Ölzustands, wie beispielsweise der Ölverschmutzung, der Öltemperatur oder ähnlichem, in einem Ölsystem zur Schmierung und/oder Kühlung, insbesondere für eine Antriebseinheit in einem Kraftfahrzeug, wie beispielsweise einem Kraftfahrzeuggetriebe und/oder einem Kraftfahrzeugmotor, wobei in dem Ölsystem ein Ölfilter vorgesehen ist.

Der Ölzustand in Ölsystemen zur Schmierung und/oder Kühlung eines Kraftfahrzeuggetriebes und/oder eines Kraftfahrzeugmotors wird maßgeblich durch jegliche Verschmutzung des Öls und hohe Betriebstemperaturen bzw. einem zu geringen Ölstand beeinflußt. Eine gravierende Verschmutzung des Öls ist die Hauptursache für Störungen, Ausfälle und Verschleiß der Komponenten eines Ölsystems. Durch entsprechende Filtereinrichtungen wird der Schmierstoff gereinigt. Dadurch soll eine möglichst gleichbleibende Schmierstoffqualität gewährleistet werden, damit die geforderte Lebensdauer der Systemkomponenten und sonstiger geschmierter Maschinenteile, wie beispielsweise Wälzlager und Zahnräder sowie die des Schmierstoffs, sicher erreicht wird.

Vom Hersteller eines Kraftfahrzeuggetriebes müssen verlässliche Ölwechselintervalle vorgegeben werden, so daß die geforderte Lebensdauer der zu schmierenden bzw. zu kühlenden Einheit erreicht werden kann. Hierzu sind aus dem Stand der Technik vielfältige Ölfilter und Ölreinigungseinrichtungen bekannt.

Untersuchungen gebrauchter Motoröle haben gezeigt, daß diese schon nach sehr unterschiedlichen Fahrleistungen verbraucht sein können. Daher wurden Alternativen zu starren Ölwechselintervallen, beispielsweise für Pkw-Motoren, untersucht. Es wurde bereits ein neuer Sensor entwickelt (MTZ Motortechnische Zeitschrift 59 (1998) 7/8, Seite 414 ff.), welcher kontinuierlich Daten zum Ölstand und zur Öltemperatur liefert.

Ein Gegenstand gemäss Anspruch 1, erster Teil, ist aus der DE-A-3 617 538 bekannt.

Aufgabe der vorliegenden Erfindung ist es, eine Vorrichtung zur Sensierung des Ölzustands anzugeben, welche eine optimierte Ölwartung mit individuellen Ölwechselintervallen ermöglicht und welche einfach und kostengünstig in großen Stückzahlen herstellbar ist.

Die vorliegende Erfindung löst diese Aufgabe mit einer Vorrichtung zur Sensierung des Ölzustands mit den Merkmalen des Anspruchs 1. Vorteilhafte Ausgestaltungen sind in den abhängigen Ansprüchen angegeben.

Im Ölfilter Mittel zur Sensierung des Ölzustands angeordnet. Der Ölfilter kann dabei in Flachbauweise als Patronenfilter oder in jeder anderen Bauform ausgeführt sein. Ein derartiger Ölfilter reinigt demnach nicht nur das Öl, sondern er ermöglicht außerdem eine vollständige Ölzustandsüberwachung, die sich auf die Überwachung der Ölverschmutzung bzw. der Filterverschmutzung, der Messung der Öltemperatur, des Ölstands oder ähnliches erstreckt. Eine derartige Integration der Sensorik in einem Ölfilter ermöglicht eine präzise, direkte Ölzustandsüberwachung an Stellen, die bisher schwer zugänglich waren. Mit dem Einsatz dieses Ölfilters können nun beispielsweise die Getriebeölwechselintervalle belastungs- und bedarfsgerecht durchgeführt werden. Ferner kann bei einer zukünftigen Lebensdauerbefüllung eines Getriebes die Ölqualität bzw. der Ölzustand einfach von außen diagnostiziert werden, ohne das Öl aus dem Ölsystem abzulassen und chemisch zu analysieren. Dadurch können Getriebeschäden vermieden werden.

Im Ölfilter sind zwei Elektroden nach Art eines Parallelplattenkondensators angeordnet sind und das Öl zwischen diesen Elektroden ein Dielektrikum darstellt. Somit wird eine einfache und kostengünstige Ausbildung eines Mittels zur Sensierung des Ölzustands im Ölfilter angegeben, welche eine Integration der Sensorik in den bereits existierenden Filterbauraum vorsieht, so daß im Ölsystem kein zusätzlicher Platzbedarf für die Sensorik erforderlich ist.

Da die Permittivität des Getriebeöls durch thermische Alterungsprodukte, Wasser, Feststoffabrieb usw. beeinflußt wird, ändert sich auch die Kapazität des Kondensators direkt proportional zur Schmutzbeladung des Öls, wenn der Kondensator mit einer Wechselspannung betrieben wird. Der Verschmutzungsgrad des Öls ist somit auf einfache Weise anzeigbar, da eine derartige Kapazitätsänderung mit den üblichen aus der Meßtechnik bekannten Anpaßschaltungen auswertbar ist.

In einer besonderen Weiterbildung der Erfindung wird vorgeschlagen, daß die Elektroden als öldurchlässige, beispielsweise siebartige, Platten ausgebildet und an je einem Gehäuseteil des Ölfilters befestigt sind. Damit wird eine einfache, kostengünstige und raumsparende Ausbildung der Sensiervorrichtung angegeben.

Nachdem die Elektroden des Plattenkondensators in die Ölfiltergehäuseteile eingesetzt sind, können diese an ihrer Trennfuge, beispielsweise mittels einer Klemmleiste oder ähnlichem, öldicht zusammengefügt werden.

Alternativ wird vorgeschlagen, daß das Gehäuse des Ölfilters aus wenigstens zwei Gehäuseteilen aus elektrisch nicht leitendem Werkstoff, beispielsweise einem Kunststoff, hergestellt ist und daß die Innenseiten der Gehäuseteile metallisiert werden, so daß diese Metallisierungen die Elektroden eines Plattenkondensators bilden. Damit wird die Anzahl der Bauteile des Ölfilters reduziert.

Im Ölfilter ist ferner ein Temperatursensor integriert. Die elektrischen Anschlußleitungen sowohl des Temperatursensors als auch der Elektroden sind dabei an der Trennfuge der beiden Gehäuseteile aus dem Ölfilter herausführbar.

In einer weiteren Ausbildung ist der Ölfilter an seinem Gehäuse mit einem Ölstandsensor versehen. Dieser ist vorteilhafterweise als analoger Sensor oder auch als Niveauschalter ausgebildet und mittels einer Haltevorrichtung am Ölfilter befestigt.

Ferner ist ein Vor-Ort-Elektronik-Modul vorgesehen, welches die Signale der Sensoren verarbeitet und weiterleitet. Dieses Vor-Ort-Elektronik-Modul ist als öldichtes Modul ausgebildet und vorteilhafterweise direkt im Ölfilter angeordnet.

Das Vor-Ort-Elektronik-Modul ist ferner über einen Zentralstecker und einen getriebeinternen Kabelbaum mit einer elektronischen Getriebesteuerung verbindbar. Dadurch wird ein zentraler elektrischer Anschluß aller Sensoren mit einem Stecker ermöglicht, so daß einerseits eine Auswertung der Sensordaten über einen beispielsweise Fahrzeugbord-Computer bzw. über eine elektronische Getriebesteuerung möglich ist. Andererseits ist damit auch eine Schnelldiagnose des Ölzustands, beispielsweise beim Service in der Werkstatt, möglich. Ferner sind auch die Bereitstellung wichtiger Informationen für ein Telematik-System, beispielsweise für ein Kraftfahrzeug, denkbar.

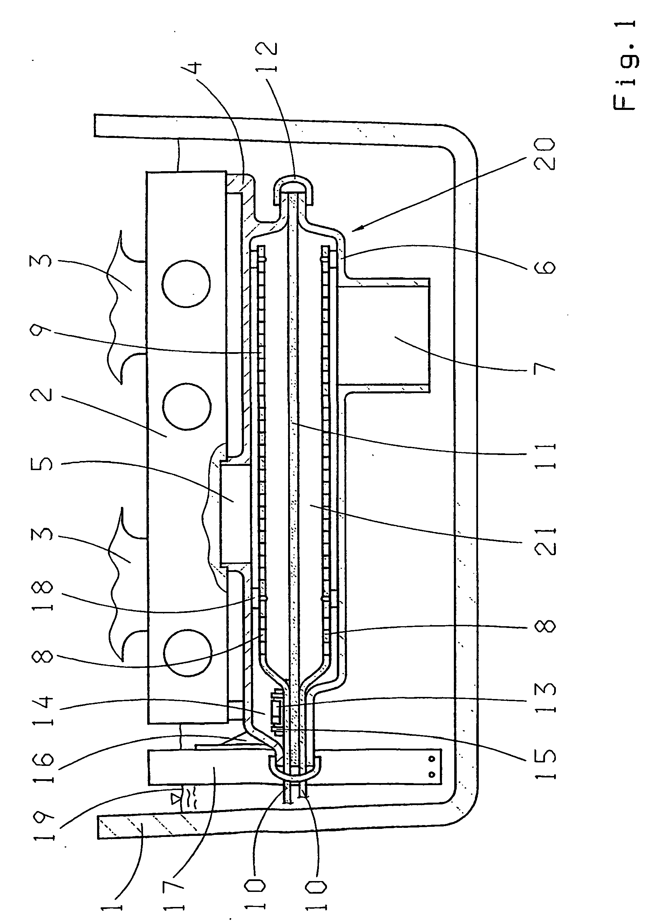

Weitere Ziele, Vorteile und Ausgestaltungen der Erfindung ergeben sich aus der nachfolgenden Beschreibung des Ausführungsbeispiels, das in der Figur näher dargestellt ist.

In der einzigen Figur ist ein Längsschnitt durch eine Ölwanne eines Kraftfahrzeuggetriebes mit der im Ölfilter integrierten Sensorik dargestellt.

Eine Ölwanne 1 ist an der Unterseite eines nicht gezeigten Kraftfahrzeug-Automatikgetriebes angebracht. Das hydraulische Steuergerät 2 des Getriebes wird über die beiden Flansche 3 am Getriebegehäuse montiert. Auf der Unterseite des Steuergeräts befindet sich ein Ölfilter 20, beispielsweise in Flachbauweise. Dieser besteht aus einem Gehäuseoberteil 4, das einen Auslaßstutzen 5 enthält sowie ein Gehäuseunterteil 6, das einen Einlaßstutzen 7 enthält. In dem Ober- und Unterteil befinden sich jeweils eine Elektrode 8, welche als flache, siebartige Platte ausgebildet ist. Diese Elektroden 8 sind parallel zueinander ausgerichtet und mittels der Träger 18 mit dem Filtergehäuseteil 4 bzw. 6 verbunden. Die Durchbrüche 9 der Elektroden 8 stellen den Öldurchfluß durch die Elektroden sicher. Der elektrische Anschluß 10 der Elektrode 8 wird aus der Trennfuge zwischen dem Oberteil 4 und dem Unterteil 6 herausgeführt. In der Trennfuge des Ölfilters 20 ist ein Filtervlies 11 angeordnet, welches beispielsweise durch - nicht gezeigte - Rippenstrukturen in den beiden Gehäusehälften abgestützt wird.

Alternativ können das Gehäuseoberteil 4 und das Unterteil auch aus elektrisch nicht leitendem Werkstoff, beispielsweise einem Kunststoff, hergestellt sein und die Innenseiten der Gehäuseteile 4 und 5 metallisiert werden, so daß die metallisierten Flächen dann die Elektroden eines Plattenkondensators bilden. Auf diese Weise ist der Ölfilter mit Sensorik aus einer besonders geringen Anzahl von Bauteilen herstellbar.

Das Gehäuseoberteil 4 wird über das Filtervlies 11 mit dem Gehäuseunterteil 6 durch eine Klemmleiste 12 öldicht verpreßt. Das Öl gelangt aus dem Getriebesumpf über den Einlaßstutzen 7 in den Filter und verläßt diesen in gereinigtem Zustand durch den Auslaßstutzen 5.

Die beiden Elektroden 8 bilden in der dargestellten Bauart einen Parallelplattenkondensator, wobei das Getriebeöl als Dielektrikum dient. Da die Permittivität des Getriebeöls durch thermische Alterungsprodukte, Wasser, Feststoffabrieb oder ähnliches beeinflußt wird, ändert sich die Kapazität des Kondensators direkt proportional zur Schmutzbeladung des Getriebeöls, wenn dieser über die Anschlüsse 10 mit einer Wechselspannung betrieben wird. Der Verschmutzungsgrad des Filtervlieses trägt dabei in gleicher Weise zu einer Kapazitätsänderung bei und ist somit ebenfalls meßbar. Diese Kapazitätsänderung ist mit den üblichen aus der Meßtechnik bekannten Anpaßschaltungen auswertbar. Die vorbeschriebene Anordnung stellt somit eine Einrichtung zur Überwachung der Öl- bzw. der Filterverschmutzung dar.

Ein Temperatursensor 13 befindet sich vorzugsweise in einer Kammer 14 des Gehäuseoberteils 4 und wird mit einer Haltevorrichtung 15 fixiert. Die elektrischen Anschlußleitungen des Temperatursensors 13 sind vorzugsweise als Stanzgitter ausgeführt und werden parallel zu den Elektrodenanschlüssen 10 aus dem Ölfilter 20 herausgeführt.

Es ist weiterhin möglich, das Gehäuseoberteil 4 bzw. das Gehäuseunterteil 6 des Ölfilters 20 mit einer Haltevorrichtung 16 zu versehen, welche einen Ölstandsensor 17 aufnimmt. Dieser Sensor mißt den Getriebeölstand im Stillstand. Der Sensor 17 kann sowohl als analoger Sensor oder auch als Niveauschalter ausgeführt sein.

Die elektrische Signalverarbeitung der Sensoren, d. h. des Verschmutzungssensors, des Temperatursensors als auch des Ölstandsensors, kann mit einer Vor-Ort-Elektronik erfolgen, die sich beispielsweise in einer weiteren, nicht gezeigten Kammer des Gehäuseoberteils 4 oder auch im Ölstandsensor 17 befindet und öldicht verschlossen sein kann. Die Signale dieser Vor-Ort-Elektronik werden dann über einen ebenfalls nicht gezeigten Zentralstecker mit reduzierter Leitungsanzahl und beispielsweise einem getriebeinternen Kabelbaum an eine elektronische Getriebesteuerung übermittelt.

Ein erfindungsgemäßer Ölfilter reinigt somit nicht nur das Öl, sondern ermöglicht außerdem eine Ölzustandsüberwachung, die sich auf die Überwachung der Ölverschmutzung, der Überwachung der Filterverschmutzung, die Messung der Öltemperatur und des Ölstands erstreckt. Die vorgeschlagene Integration der Sensorik in den Ölfilter erlaubt nun eine präzise Ölzustandüberwachung an Stellen, welche bisher nur schwer zugänglich waren. Der Filter kann sowohl als Ölfilter in Flachbauweise, wie in der Figur gezeigt, als auch als Patronenfilter oder in einer anderen Filterbauart ausgeführt sein.

### Bezugszeichen

- 1: Ölwanne
- 2: hydraulisches Steuergerät
- 3: Flansch
- 4: Gehäuseoberteil
- 5: Auslaßstutzen
- 6: Gehäuseunterteil
- 7: Einlaßstutzen
- 8: Elektrode
- 9: Durchbrüche
- 10: elektrischer Anschluß
- 11: Filtervlies
- 12: Klemmleiste
- 13: Temperatursensor
- 14: Kammer
- 15: Haltevorrichtung (des Temperatursensors)
- 16: Haltevorrichtung (des Ölstandsensors)
- 17: Ölstandsensor
- 18: Träger
- 19: Ölstand
- 20: Ölfilter
- 21: Parallelplattenkondensator

## Patentansprüche

1. Vorrichtung zur Sensierung des Ölzustands, wie beispielsweise Ölverschmutzung, Öltemperatur oder ähnliches, in einem Ölsystem zur Schmierung und/oder Kühlung, insbesondere für eine Antriebseinheit in einem Kraftfahrzeug, wie beispielsweise einem Kraftfahrzeuggetriebe und/oder einem Kraffahzeugmotor, wobei in dem Ölsystem ein Ölfilter vorgesehen ist, in weichem Mittel zur Sensierung des Ölzustands angeordnet sind und zwei Elektroden (8) nach Art eines Parallelplattehkondensators (21) angeordnet sind und das Öl zwischen den Elektroden (8) ein Dielektrikum darstellt, **dadurch gekennzeichnet, dass** der Ölfilter (20) mit einem Ölstandsensor (17) versehen und im Ölfilter (20) ein Temperatursensor (13) vorgesehen ist.

2. Vorrichtung nach Anspruch 1, **dadurch gekennzeichnet, dass** der Kondensator (21) mit Wechselspannung betrieben wird, so dass der Verschmutzungsgrad des Öls bzw. eines Filtermittels unmittelbar einer Kapazitätsänderung des Kondensators (21) entspricht.

3. Vorrichtung nach Anspruch 2, **dadurch gekennzeichnet, dass** die Elektroden (8) je einem Gehäuseteil (4, 6) des Ölfilters (20) zugeordnet sind und zwischen den beiden Elektroden (8) ein Filtervlies (11) oder ähnliches Filtermittel angeordnet ist.

4. Vorrichtung nach Anspruch 3, **dadurch gekennzeichnet, dass** die Elektroden (8) als Öldurchlässige, beispielsweise siebartige, Platten ausgebildet und an je einem Gehäuseteil (4, 6) des Ölfilters (20) befestigt sind.

5. Vorrichtung nach Anspruch 4, **dadurch gekennzeichnet, dass** das Gehäuse des Ölfilters (20) aus wenigstens zwei Gehäuseteilen (4, 6) aus elektrisch nicht leitendem Werkstoff, beispielsweise einem Kunststoff, besteht und die Innenseiten der Gehäuseteile metallisiert sind, so dass mittels dieser Metallisierung ein Plattenkondensator erzeugbar ist

6. Vorrichtung nach einem der vorangehenden Ansprüche, **dadurch gekennzeichnet, dass** der elektrische Anschluß (10) der Elektroden (8) an der Trennfuge der beiden Gehäuseteile (4, 6) aus dem Ölfilter (20) herausführbar ist.

7. Vorrichtung nach einem der vorangehenden Ansprüche, **dadurch gekennzeichnet, dass** die beiden Gehäuseteile (4, 6) an ihrer Trennfuge mittels einer Klemmleiste (12) oder einem ähnlichen Verbindungselement öldicht zusammengefügt sind.

8. Vorrichtung nach einem der Ansprüche 1 bis 7, **dadurch gekennzeichnet, dass** ein Temperatursensor an einer Haltevorrichtung (16) befestigbar ist.

9. Vorrichtung nach Anspruch 8, **dadurch gekennzeichnet, dass** der elektrische Anschluß des Temperatursensors (13) an der Trennfuge der beiden Gehäuseteile (4, 6) aus dem Ölfilter (20) herausführbar ist.

10. Vorrichtung nach Anspruch 9, **dadurch gekennzeichnet, dass** der Ölstandsensor (17) als analoger Sensor oder als Niveauschalter ausgebildet ist.

11. Vorrichtung nach Anspruch 1 oder 10, **dadurch gekennzeichnet, dass** der Ölstandsensor (17) mittels einer Haltevorrichtung (16) an dem Ölfilter (20) befestigbar ist.

12. Vorrichtung nach einem der vorangehenden Ansprüche, **dadurch gekennzeichnet, dass** ein Vor-Ort-Elektronik-Modul vorgesehen ist, welches die Signale der Sensoren verarbeitet und weiterleitet.

13. Vorrichtung nach Anspruch 12 **dadurch gekennzeichnet, dass** das Vor-Ort-Elektronik-Modul als öldichtes Modul ausgebildet und im Ölfilter (20) angeordnet ist.

14. Vorrichtung nach Anspruch 12 oder 13, **dadurch gekennzeichnet, dass** das Vor-Ort-Elektronik-Modul über einen Zentralstecker und einen getriebeinternen Kabelbaum mit der elektronischen Getriebesteuerung EGS verbindbar ist.

## Claims

1. The invention concerns a device for sensing the oil condition, such as oil contamination, oil temperature or similar oil conditions, within an oil system used for lubrication and/or cooling, in particular for a drive unit in a motor vehicle, such as a motor-vehicle transmission and/or a motor-vehicle engine, with the oil system featuring an oil filter, in which means for sensing the oil condition and two electrodes (8) functioning in the manner of a parallel plate capacitor (21) are arranged, and with the oil between the electrodes (8) constituting a dielectric medium, **characterized in that** the oil filter (20) features an oil-level sensor (17) and that a temperature sensor (13) is provided in the oil filter (20).

2. A device according to claim 1, **characterized in that** the capacitor (21) is powered by AC voltage, so that the degree of contamination of the oil or of a filtering medium is directly linked to capacity changes of the capacitor (21).

3. A device according to claim 2, **characterized in that** each electrode (8) is assigned to a particular part of the housing (4, 6) of the oil filter (20) and that a filtering fleece (11) or a similar filtering medium is arranged between the two electrodes (8).

4. A device according to claim 3, **characterized in that** the electrodes (8) are designed as oil-permeable, e.g. screen-like, plates, each of which is fixed to a part of the housing (4, 6) of the oil filter (20).

5. A device according to claim 4, **characterized in that** the housing of the oil filter (20) consists of at least two housing parts (4, 6) made of nonconductive material, e.g. a plastic material, and that the inner sides of the housing parts are metallized, so that a plate capacitor can be realized by means of such metallization.

6. A device according to one of the preceding claims, **characterized in that** the electric connection (10) of the electrodes (8) can be removed from the oil filter (20) at the joint of the two housing parts (4, 6).

7. A device according to one of the preceding claims, **characterized in that** a connecting bar (12) or a similar joining element for oil-tight joining of the two housing parts (4, 6) is provided on the joint of the two housing parts (4, 6).

8. A device according to one of the preceding claims 1 through 7, **characterized in that** a temperature sensor can be fixed to a damping device (16).

9. A device according to claim 8, **characterized in that** the electric connection of the temperature sensor (13) can be removed from the oil filter (20) at the joint of the two housing parts (4, 6).

10. A device according to claim 9, **characterized in that** the oil-level sensor (17) is designed as an analog sensor or as a level sensor.

11. A device according to claim 1 or 10, **characterized in that** the oil-level sensor (17) can be fastened to the oil filter (20) by means of a clamping device (16).

12. A device according to one of the preceding claims, **characterized in that** an on-site electronic module is provided which processes and transmits the sensor signals.

13. A device according to claim 12, **characterized in that** the on-site electronic module is designed as an oil-tight module and is arranged in the oil filter (20).

14. A device according to claim 12 or 13, **characterized in that** the on-site electronic module can be connected to the ECU via a central connector and via a transmission-internal cable tree.

## Revendications

1. Dispositif de détection de l'état de l'huile, comme par exemple la pollution de l'huile, la température de l'huile ou paramètres similaires, dans un système d'huile, pour la lubrification et/ou le refroidissement, en particulier d'une unité de traction dans un véhicule automobile, comme par exemple une boîte de vitesses d'un véhicule automobile et/ou un moteur d'un véhicule automobile, sachant que dans le système d'huile est prévu un filtre à huile, dans lequel sont disposés des moyens de détection de l'état d'huile et deux électrodes (8), construit comme un condensateur à plaques parallèles (21), et sachant que l'huile entre les électrodes (8) représente un diélectrique, **caractérisé en ce que** le filtre à huile (20) est muni d'un capteur du niveau d'huile (17) et **en ce que** dans le filtre à huile (20) est prévu un capteur de température (13).

2. Dispositif selon la revendication 1, **caractérisé en ce que** le condensateur (21) fonctionne avec courant alternatif, en sorte que le degré de pollution de l'huile et/ou d'un agent de filtrage corresponde directement à une variation de la capacité du condensateur (21).

3. Dispositif selon la revendication 2, **caractérisé en ce que** chacune des électrodes (8) est associée à une partie du carter (4, 6) du filtre à huile (20) et **en ce que** entre les deux électrodes (8) est disposé un feutre (11) ou un agent de filtrage similaire.

4. Dispositif selon la revendication 3, **caractérisé en ce que** les électrodes (8) ont la forme de plaques pénétrables à l'huile, par exemple comme celle d'un tamis, et **en ce que** chacune des électrodes est fixée sur une partie du carter (4, 6) du filtre à huile (20).

5. Dispositif selon la revendication 4, **caractérisé en ce que** le carter du filtre à huile (20) est composé d'au moins deux parties (4, 6) d'une matière non conductrice de l'électricité, par exemple une matière plastique, et **en ce que** les surfaces internes des parties du carter sont métallisées, cette métallisation permettant de créer un condensateur à plaques.

6. Dispositif selon une des revendications précédentes, **caractérisé en ce qu'**il est possible de faire sortir la connexion électrique (10) des électrodes (8), au niveau de la ligne de joint des deux parties du carter (4, 6), du filtre à huile (20).

7. Dispositif selon une des revendications précédentes, **caractérisé en ce que** les deux parties du carter (4, 6) sont unies de façon étanche à l'huile au niveau de leur ligne de joint au moyen d'une nervure de serrage (12) ou d'un élément de fixation similaire.

8. Dispositif selon une des revendications 1 à 7, **caractérisé en ce que** le capteur de température peut être fixé sur un dispositif de fixation (16).

9. Dispositif selon la revendication 8, **caractérisé en ce qu'**il est possible de faire sortir la connexion électrique du capteur de température (13), au niveau de la ligne de joint des deux parties du carter (4, 6), du filtre à huile (20).

10. Dispositif selon la revendication 9, **caractérisé en ce que** le capteur du niveau d'huile (17) est réalisé comme un capteur analogue ou comme un contacteur de niveau.

11. Dispositif selon les revendications 1 ou 10, **caractérisé en ce que** le capteur du niveau d'huile (17) peut être fixé sur le filtre à huile (20) au moyen d'un dispositif de fixation (16).

12. Dispositif selon une des revendications précédentes, **caractérisé en ce qu'**il est prévu un module électronique embarqué, élaborant et transmettant les signaux des capteurs.

13. Dispositif selon la revendication 12, **caractérisé en ce que** le module électronique embarqué est réalisé comme un module étanche à l'huile et **en ce qu'**il est disposé dans le filtre à huile (20).

14. Dispositif selon les revendications 12 ou 13, **caractérisé en ce que** le module électronique embarqué peut être connecté par l'intermédiaire d'une prise centrale et d'un faisceau de câbles situé à l'intérieur de la boîte de vitesses à l'unité de commande électronique de la boîte de vitesses (UCE).
